# EUROPÄISCHE PATENTSCHRIFT

(11) **EP 3 310 627 B1**
(45) Veröffentlichungstag und Bekanntmachung des Hinweises auf die Patenterteilung: **30.01.2019**
(21) Anmeldenummer: 16729274.7
(22) Anmeldetag: 16.06.2016
(51) Int. Cl.: B60R 25/24

(54) **SCHLIESSSYSTEM FÜR EIN KRAFTFAHRZEUG**
LOCKING SYSTEM FOR A VEHICLE
SYSTÈME DE VERROUILLAGE POUR UN VÉHICULE

(30) Priorität: 18.06.2015 DE 102015007697
(43) Veröffentlichungstag der Anmeldung: 25.04.2018
(73) Patentinhaber: Marquardt GmbH, 78604 Rietheim-Weilheim (DE)
(72) Erfinder: BÄR, Bernd, 78628 Rottweil (DE); FISCHER, Jörg, 78166 Donaueschingen (DE)
(74) Vertreter: Otten, Roth, Dobler & Partner mbB Patentanwälte
(86) Internationale Anmeldenummer: PCT/EP2016/063849
(87) Internationale Veröffentlichungsnummer: WO 2016/202910

(56) Entgegenhaltungen:
- EP-A1- 1 721 793
- DE-A1-102009 054 168
- DE-A1-102011 117 978
- US-A1- 2005 058 232
- US-A1- 2006 164 210

## Beschreibung

Die Erfindung betrifft ein Schließsystem nach dem Oberbegriff des Patentanspruchs 1.
Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung und/oder als Zündschlosssysteme, Lenkradverriegelungen, Wegfahrsperren o. dgl. für die Fahrberechtigung verwendet.
Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, des Zündschlosses o. dgl. ausgebildeten ersten Einrichtung und einer zugehörigen, in der Art eines elektronischen Schlüssels ausgebildeten zweiten Einrichtung. Die beiden Einrichtungen besitzen zu deren bestimmungsgemäßen Betrieb Sender und/oder Empfänger für die Übertragung der elektromagnetischen Signale. Im bestimmungsgemäßen Betrieb ist zwischen dem Schlüssel und der Steuereinrichtung wenigstens ein Signal als codiertes Betriebssignal zur Authentifikation des Schlüssels übertragbar, so dass nach positiver Auswertung des übertragenen Betriebssignals und damit bei berechtigtem Schlüssel eine Änderung des Zustandes der Steuereinrichtung bewirkbar ist.
Solche Schließsysteme sind auch mit sogenannten "Keyless"-Funktionalitäten weiterentwickelt. So ist bei der "KeylessEntry"-Funktionalität eine manuelle Betätigung des elektronischen Schlüssels durch den Benutzer nicht mehr notwendig. Es genügt, dass der Benutzer den Schlüssel mit sich führt. Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "KeylessGo"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/StopTaste im Armaturenbrett oder in der Mittelkonsole betätigt.

Es hat sich nun herausgestellt, dass sich Störeinflüsse bei der Übertragung der elektromagnetischen Signale negativ auf den Betrieb des Schließsystems auswirken können. In manchen Fällen können durch solche Störeinflüsse dem an sich berechtigten Benutzer die Zugangsberechtigung und/oder die Fahrberechtigung verweigert werden. Insbesondere können Störeinflüsse im niederfrequenten (LF/Low Frequency)Bereich beim Laden eines Elektro- und/oder Hybrid-Fahrzeugs auftreten, was sich beispielsweise in einer negativen Antwort der zweiten Einrichtung aufgrund der fehlschlagenden Messung des LF-Pegels hervorgerufen durch die LF-Störung äußert.

Weiter ist aus der DE 10 2009 054 168 A1 sowie der US 2006/164 210 A1 ein Schließsystem bekannt, bei dem ein Filter zur Verminderung und/oder Unterdrückung von Störeinflüssen in der ersten Einrichtung und/oder in der zweiten Einrichtung vorgesehen ist.

Der Erfindung liegt die Aufgabe zugrunde, das Schließsystem derart weiterzuentwickeln, dass die Robustheit gegenüber Störeinflüssen verbessert ist.

Diese Aufgabe wird bei einem gattungsgemäßen Schließsystem durch die kennzeichnenden Merkmale des Anspruchs 1 gelöst.

Beim erfindungsgemäßen Schließsystem ist der Filter zur Verminderung und/oder Unterdrückung von Störeinflüssen zuschaltbar und/oder aktivierbar ausgebildet. Mit Hilfe des Filters wird insbesondere die Einkopplung von Störfrequenzen, und zwar vor allem bei der Signalübertragung, verringert. Vorteilhafterweise wird somit die Betriebssicherheit für das Schließsystem gesteigert. Des Weiteren ist eine Einsparung von Energie erzielt, wodurch wiederum beispielsweise die Lebensdauer der Batterie für die zweite Einrichtung gesteigert wird. Weitere Ausgestaltungen der Erfindung sind Gegenstand der Unteransprüche.

In einer Weiterbildung kann die erste Einrichtung ein erstes elektromagnetisches Signal für die zugehörige zweite Einrichtung als Wecksignal senden. Dadurch wird die zweite Einrichtung aus einem Ruhezustand mit verringertem Energiebedarf in einen aktivierten Zustand für den bestimmungsgemäßen Betrieb übergeführt. Die erste Einrichtung kann nach Aussenden des ersten elektromagnetischen Signals ein Bereichsabgrenzungssignal als drittes elektromagnetisches Signal senden, mit dessen Hilfe die zugehörige zweite Einrichtung deren Standort in Bezug auf die erste Einrichtung, insbesondere am und/oder im Kraftfahrzeug, bestimmen kann. Der Standort der zweiten Einrichtung in Bezug auf die erste Einrichtung am und/oder im Kraftfahrzeug kann anschließend mit einem vierten Signal als Rückantwortsignal von der zweiten zur ersten Einrichtung gesendet werden. Sind diese Signale erfolgreich übermittelt, so kann schließlich die Authentifikation der zweiten Einrichtung mittels wenigstens eines übertragenen, weiteren fünften Signals als codiertes Betriebssignal durchgeführt werden. Sind somit die für das Wecken sowie die Bereichsabgrenzung notwendigen Vorbedingungen nicht erfüllt, so wird die an sich aufwendige Authentifikation gar nicht durchgeführt, womit eine effizientere Betriebsweise für das Schließsystem ermöglicht ist. Das der Authentifikation dienende fünfte elektromagnetische Signal kann schließlich in einer die Diebstahlsicherheit erhöhenden bidirektionalen Kommunikation bestehend aus mehreren Teilsignalen zwischen der ersten und der zweiten Einrichtung übertragen werden.

Zwischen dem Weck- und dem Bereichsabgrenzungssignal kann von der ersten Einrichtung ein zweites elektromagnetisches Signal als Selektionssignal gesendet werden, das insbesondere eine Information zur Identität des Kraftfahrzeugs enthält. Mit Hilfe des Selektionssignals kann der Dialog mit der zweiten Einrichtung bereits dann frühzeitig abgebrochen werden, wenn die zweite Einrichtung zu einem anderen Kraftfahrzeug, das gegebenenfalls jedoch vom gleichen Kraftfahrzeug-Typ ist, zugehörig ist. Somit werden lediglich demselben Kraftfahrzeug und/oder Kraftfahrzeug-Typ zugeordnete zweite Einrichtungen aktiviert und/oder verbleiben im aktivierten Zustand sowie im aktivierten Zustand befindliche, nicht zugehörige zweite Einrichtungen werden in den Ruhezustand zurückgeführt. Dadurch ist jeweils eine weitere Steigerung in der Effizienz der Betriebsweise des Schließsystems möglich.

Besonders bevorzugt ist, für das Weck- und/oder für das Bereichsabgrenzungssignal ein induktives Signal zu verwenden, indem die Trägerwelle für das erste Signal und/oder für das dritte Signal eine im induktiven, niederfrequenten (LF/Low Frequency- bzw. NF/Niederfrequenz-)Bereich liegende Frequenz aufweist. Aufgrund der begrenzten Reichweite eines induktiven Signals lässt sich somit der Wirkbereich für das Schließsystem auf einfache Art und Weise einstellen. Gleichzeitig wird dadurch die Sicherheit vor Manipulation am Schließsystem durch unberechtigte Benutzer gesteigert. Beispielsweise kann die Frequenz für die LF-Trägerwelle bzw. die NF-Trägerwelle in etwa 20 kHz, 120 kHz, 125 kHz o. dgl. betragen. Weiterhin ist bevorzugt, für das Selektionssignal und/oder für das Rückantwortsignal und/oder für das codierte Betriebssignal ein Funksignal zu verwenden, indem die Trägerwelle für das zweite Signal und/oder für das vierte Signal und/oder für das fünfte Signal eine im höherfrequenten (RF/Radio Frequency- bzw. HF/Hochfrequenz/High Frequency-)Bereich liegende Frequenz aufweist. Dadurch sind aus Komfortgründen für den Benutzer ein vergrößerter Funktionsbereich und/oder eine schnellere Kommunikation gegeben. Beispielsweise kann die Frequenz für die RF-Trägerwelle beziehungsweise HF-Trägerwelle in etwa 315 MHz, 433 MHz, 868 MHz o. dgl. betragen.

Zweckmäßigerweise kann dann der Filter bei der Übertragung eines Signals, insbesondere bei der Übertragung des ersten und/oder des dritten Signals, zugeschaltet und/oder aktiviert werden. Zweckmäßigerweise kann der Filter derart ausgestaltet sein, dass dieser in nicht zugeschaltetem und/oder inaktiviertem Zustand einen geringen Ruhestromverbrauch, und zwar bevorzugterweise keinen Ruhestromverbrauch, besitzt.

Störeinflüsse können sich insbesondere für den Betrieb der zweiten Einrichtung negativ auswirken. Es kann es sich daher anbieten, dass der Filter in der zweiten Einrichtung befindlich ist. Mit Hilfe des Filters kann somit die Einkopplung von Störfrequenzen in die zweite Einrichtung verhindert und/oder vermindert werden. Gegebenenfalls kann dann auf die Anordnung eines weiteren Filters in der ersten Einrichtung verzichtet werden, womit ohne Beeinträchtigung der Funktionssicherheit eine Kostenersparnis ermöglicht ist. Da insbesondere beim induktiven Laden eines Akkumulators eines Elektrofahrzeugs Störungen im niederfrequenten Bereich auftreten, kann es auch genügen, dass der Filter lediglich bei der Übertragung des ersten und/oder des dritten Signals zugeschaltet und/oder aktiviert wird, um so vor allem Störungen bei der Ortung bzw. Standortbestimmung der zweiten Einrichtung zu begegnen. Dadurch ist eine weitere Einsparung von Energie und folglich eine Erhöhung der Batterielebensdauer bewirkt, ohne dass Einbußen an der Funktionssicherheit der zweiten Einrichtung zu befürchten sind.

Um die Standortbestimmung der zweiten Einrichtung in einfacher Art und Weise zu ermöglichen, kann in der zweiten Einrichtung ein Mittel zur Messung der Feldstärke (F) des von der ersten Einrichtung übertragenen dritten Signals angeordnet sein. Zweckmäßigerweise kann das Mittel zur Messung der Feldstärke (F) ein in funktioneller Abhängigkeit, beispielsweise proportional oder logarithmisch, zur Feldstärke (F) stehendes RSSI(Radio Signal Strength Indicator)-Signal erzeugen. Die Standortbestimmung in der zweiten Einrichtung kann dann unter Verwendung des RSSI-Signals durchgeführt werden. Zwecks Verringerung und/oder Verhinderung von Störeinflüssen kann der Filter während der Messung für das RSSI-Signal zugeschaltet und/oder aktiviert werden.

In kompakter Ausgestaltung kann das Mittel zur Messung der Feldstärke (F) als ein integrierter Baustein ausgestaltet sein. Es kann sich weiterhin anbieten, dass der Sender und/oder Empfänger für das erste Signal und/oder für das dritte Signal sowie das Mittel zur Messung der Feldstärke (F) als eine anwendungsspezifische integrierte Schaltung, also ein sogenanntes ASIC, ausgebildet ist, welche besonders reaktionsschnell arbeitet. Insbesondere bei Verwendung einer niederfrequenten Trägerwelle für das erste Signal und/oder für das dritte Signal kann dieses ASIC in der Art eines LF(Low Frequency)-ASICs ausgebildet sein. In kostensparender Art und Weise kann der Filter ebenfalls ein Bestandteil des LF-ASICs sein. Der Filter kann in vorteilhafter Weise bei der Übertragung des dritten Signals, insbesondere für den Betrieb des LF-ASICs als ein LF-Feldmessgerät für die Messung des RSSI-Signals, zugeschaltet und/oder aktiviert sein, so dass eine Verfälschung der Standortbestimmung auch beim Auftreten von niederfrequenten Störungen ausgeschlossen ist.

Die Erfindung stellt weiterhin ein Verfahren zum Betrieb eines Schließsystems, insbesondere für die Zugangs- und/oder Fahrberechtigung bei einem Kraftfahrzeug in der Art einer KeylessEntry/Go-Funktionalität bereit. Für das Schließsystem sind eine wenigstens zwei Zustände besitzende, als Steuereinrichtung ausgebildete erste Einrichtung, wie eine Steuereinrichtung zur Ent- und/oder Verriegelung der Autotüren, des Zündschlosses, der Lenkradverriegelung, zur Freigabe und/oder Sperrung der Wegfahrsperre, des Motorsteuergeräts o. dgl., und eine zugehörige, in der Art eines elektronischen Schlüssels, eines ID-Gebers, einer Chipkarte o. dgl. ausgebildete zweite Einrichtung vorgesehen. Die beiden Einrichtungen besitzen zu deren bestimmungsgemäßen Betrieb Sender und/oder Empfänger für insbesondere elektromagnetische Signale. Dabei handelt es sich insbesondere bei wenigstens einem der zwischen der zweiten Einrichtung und der ersten Einrichtung übertragenen Signale um ein codiertes Betriebssignal zur Authentifikation der zweiten Einrichtung, so dass nach positiver Auswertung des übertragenen Betriebssignals bei berechtigter zweiter Einrichtung eine Änderung des Zustandes der ersten Einrichtung bewirkbar ist. Störeinflüsse in der zweiten Einrichtung und/oder in der ersten Einrichtung werden mittels eines Filters vermindert und/oder unterdrückt. Der Filter kann insbesondere bei Bedarf zugeschaltet und/oder aktiviert werden. Das erfindungsgemäße Verfahren steigert so die Betriebs- und/oder Funktionssicherheit für den bestimmungsgemäßen Betrieb des Schließsystems.

In weiterer Ausgestaltung des Verfahrens zum Betrieb des Schließsystems kann von der ersten Einrichtung ein erstes Signal für die zugehörige zweite Einrichtung als Wecksignal gesendet werden, derart dass die zweite Einrichtung aus einem Ruhezustand mit verringertem Energiebedarf in einen aktivierten Zustand für den bestimmungsgemäßen Betrieb übergeführt wird. Weiterhin kann von der ersten Einrichtung nach Aussenden des ersten Signals wenigstens ein weiteres, drittes Signal als Bereichsabgrenzungssignal gesendet werden, derart dass die zugehörige zweite Einrichtung deren Standort in Bezug auf die erste Einrichtung, insbesondere am und/oder im Kraftfahrzeug, bestimmen kann. Zwecks Einsparung von Energie kann der Filter in der zweiten Einrichtung bei der Übertragung des ersten und/oder des dritten Signals zur Verminderung und/oder Unterdrückung von Störeinflüssen zugeschaltet und/oder aktiviert werden. Insbesondere kann die Zuschaltung und/oder Aktivierung des Filters in bedarfsgerechter Art und Weise für die Messung der Feldstärke (F) des dritten Signals für die Bestimmung des Standorts der zweiten Einrichtung erfolgen.

Für eine besonders bevorzugte Ausgestaltung des erfindungsgemäßen Schließsystems ist nachfolgendes festzustellen.

Beim Auftreten von LF-Störungen schlägt die LF-Messung des RSSI-Pegels schon sehr früh fehl, was sich in einer negativen Antwort des elektronischen Schlüssels äußert. Passiv Entry und/oder Passiv Start (Keyless-)Systeme müssen jedoch robust gegenüber Störeinflüssen sein.

Die Steigerung einer solchen Robustheit kann durch Filter bewirkt werden, die gegen die Einkopplung von Störfrequenzen genutzt werden. Die Störung von Keyless-Systemen ergibt sich hauptsächlich aus der Verfälschung der Ortungsfeldmessungen. Die Weckfähigkeit für das Keyless-System auch im Beisein von Störern ist durch die Verwendung des Filters deutlich höher.

Allerdings benötigt ein solcher Filter Strom zu dessen Betrieb. Somit wird die Ruhestromaufnahme des für die Übertragung der LF-Signale eingesetzten LF-ASICs hierdurch erhöht, was unter Umständen die Batterielebensdauer für den elektronischen Schlüssel verkürzen kann. In einer Weiterbildung der Erfindung ist erkannt, dass der bzw. die Filter für die Sicherstellung der Funktion der RSSI-Messung nicht daueraktiv sein müssen und daher nicht ständig einen Ruhestrom benötigen. Sie können vielmehr für den Betrieb des LF-ASICs als LF-Feldmessgerät für die RSSI-Messung zugeschaltet werden.

Weiter ist festgestellt, dass das erfindungsgemäße Schließsystem durch die Störfelder keine Beeinträchtigung der Weckreichweite erfährt. Damit benötigt derjenige Bereich, der im LF-ASIC daueraktiv sein muss, nämlich der Korrelator, keine Zusatzfilterung. Insoweit ist eine negative Einwirkung auf die Batterielebensdauer hier nicht zu befürchten.

Die mit der Erfindung erzielten Vorteile bestehen insbesondere darin, dass das Schließsystem mit Hilfe des zusätzlichen Filters die erhöhten Anforderungen an die Störsicherheit auf LF-Basis erfüllt. Insbesondere ist der parallele Betrieb mit Systemen für das WPC (Wireless Power Charging) oder für das Laden des kompletten Fahrzeugs bei Elektro- und/oder Hybrid-Fahrzeugen ermöglicht. Das Schließsystem kann vorteilhafterweise so ausgestaltet werden, dass eine negative Auswirkung auf die Batterielebensdauer für den elektronischen Schlüssel nicht zu befürchten ist.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein mit einem Schließsystem ausgestattetes Kraftfahrzeug,
- Fig. 2: ein schematisches Blockschaltbild für das eine erste Einrichtung sowie eine zweite Einrichtung aufweisende Schließsystem im Kraftfahrzeug und
- Fig. 3: ein schematisches Blockschaltbild der ersten sowie der zweiten Einrichtung mit einem Diagramm zur Übertragung der Signale.

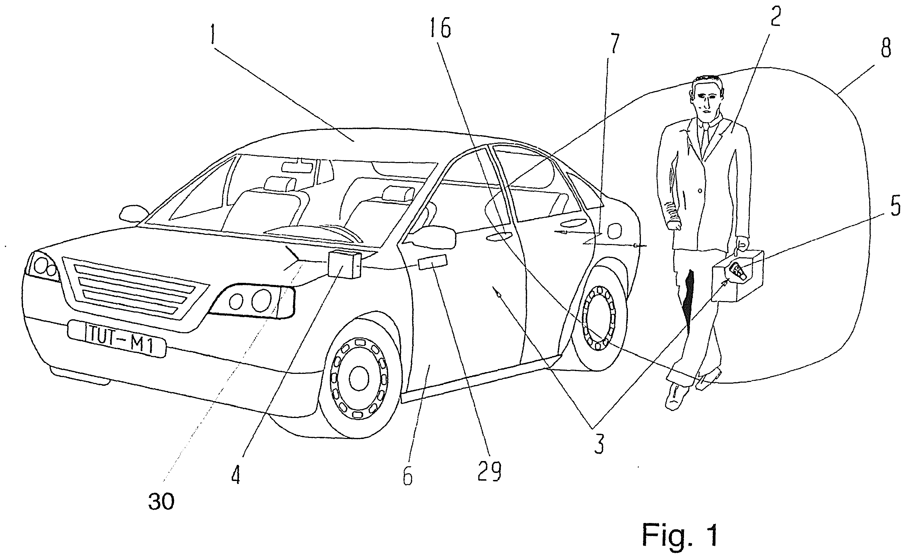

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfasst. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 Zugang zum Kraftfahrzeug 1 besitzt.

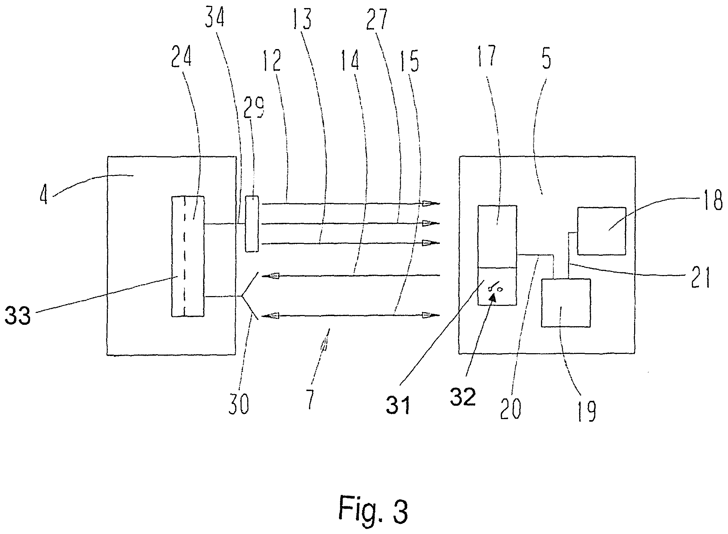

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Mittel zum Senden und/oder Empfangen von Signalen 7 mittels einer elektromagnetischen Trägerwelle. Bei wenigstens einem dieser zwischen der zweiten Einrichtung 5 und der ersten Einrichtung 4 übertragenen Signale 7 handelt es sich um ein codiertes, elektromagnetisches Betriebssignal 15 (siehe Fig. 3). Das codierte Betriebssignal 15 dient zur Authentifikation der zweiten Einrichtung 5, womit bei berechtigter zweiter Einrichtung 5 nach positiver Auswertung des übertragenen Betriebssignals 15 eine Änderung des Zustandes der ersten Einrichtung 4 bewirkbar ist. Die Übertragung des codierten Betriebssignals 15 erfolgt dann, wenn der berechtigte Benutzer 2 den Türgriff 16 an der Autotüre 6 betätigt oder sich dem Türgriff 16 annähert. Dadurch wird die Entriegelung der Autotüren 6 entsprechend der KeylessEntry-Funktionalität ausgelöst. Ebensogut kann die Übertragung des codierten Betriebssignals 15 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer 2 den Wirkbereich 8 verlassen hat.

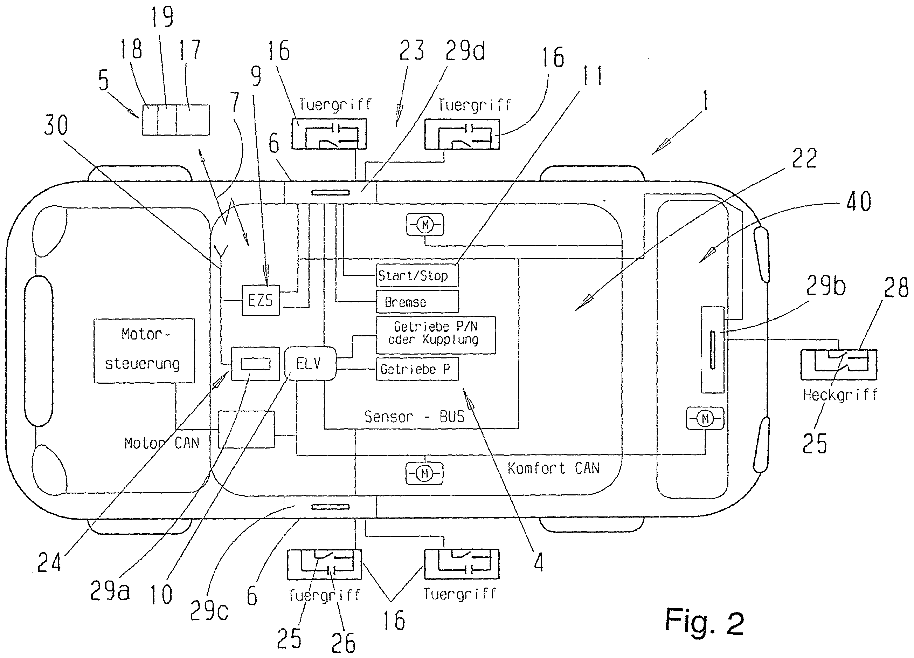

Das Schließsystem 3 stellt weiterhin die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des Zündschlosses 9 (elektronisches Zündschloss EZS) und/oder der Lenkradverriegelung 10 (elektrische Lenkradverriegelung ELV), die in Fig. 2 zu sehen sind. Ebensogut kann ein sonstiges funktionsrelevantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 15 zur Authentifikation der zweiten Einrichtung 5 erfolgt dann, wenn der berechtigte Benutzer 2 sich im Kraftfahrzeug 1 befindet und einen Start/StopSchalter 11 betätigt. Dadurch wird der Start-Vorgang o. dgl. des Kraftfahrzeugs 1 entsprechend der KeylessGo-Funktionalität ausgelöst.

Die Übertragung der Signale 7 für die KeylessEntry/Go-Funktionalität wird durch Betätigung eines Schalters und/oder eines Sensors vom Benutzer 2 ausgelöst. Für die Zugangsberechtigung kann es sich beispielsweise um die manuelle Betätigung des Türgriffs 16 an der Autotüre 6, des Heckgriffs 28 im Heckbereich 40 des Kraftfahrzeugs 1 o. dgl. handeln, wie in Fig. 2 zu sehen ist. Hierzu ist im Türgriff 16, Heckgriff 28 o. dgl. des Kraftfahrzeugs 1 ein Schalter 25 angeordnet. Wird ein beispielsweise kapazitiv arbeitender Näherungssensor 26 verwendet, wie ebenfalls in Fig. 2 am Türgriff 16 gezeigt ist, so kann vom Sensor 26 die Annäherung der Hand des Benutzers 2 an den Türgriff 16 bzw. Heckgriff 28 detektiert werden. Für die Fahrberechtigung befindet sich der vom Benutzer 2 manuell betätigbare Start/Stop-Schalter 11 im Kraftfahrzeug 1. Zweckmäßigerweise ist der Start/Stop-Schalter 11 am Gangwahlhebel, am Zündschloss 9, im Armaturenbrett, in der Mittelkonsole o. dgl. im Kraftfahrzeug 1 angeordnet.

Die Funktionsweise des erfindungsgemäßen Schließsystems 3 soll nun anhand der Fig. 3 näher erläutert werden. Zunächst sendet die erste Einrichtung 4 mittels eines Senders/Empfängers 24 als Mittel zum Senden und/oder Empfangen von Signalen ein als Wecksignal bezeichnetes erstes elektromagnetisches Signal 12 für die zugehörige zweite Einrichtung 5. Der ersten Einrichtung 4 ist dabei wenigstens eine Antenne 29, 30 zur Übertragung der Signale 7 zugeordnet. Durch das Wecksignal 12 wird die zweite Einrichtung 5 aus einem Ruhezustand mit verringertem Energiebedarf in einen aktivierten Zustand für den bestimmungsgemäßen Betrieb übergeführt. Danach sendet die erste Einrichtung 4 wenigstens ein weiteres, drittes elektromagnetisches Signal 13, das nachfolgend auch als Bereichsabgrenzungssignal bezeichnet ist. Dadurch kann die zugehörige zweite Einrichtung 5 deren Standort in Bezug auf die erste Einrichtung 4 bestimmen. Insbesondere lässt sich feststellen, ob die zweite Einrichtung 5 außerhalb am Kraftfahrzeug 1 sowie gegebenenfalls an welcher Stelle des Außenraums 23 und/oder im Innenraum 22 des Kraftfahrzeugs 1 befindlich ist. Nachfolgend sendet die zweite Einrichtung 5 mittels eines Senders/Empfängers 17 ein die Information zum ermittelten Standort beinhaltendes viertes Signal 14 zur ersten Einrichtung 4, das im folgenden auch als Rückantwortsignal bezeichnet ist. Schließlich wird dann, wie bereits beschrieben, das fünfte elektromagnetische Signal als codiertes elektromagnetisches Betriebssignal 15 zur Authentifikation mittels der Sender/Empfänger 24, 17 zwischen der ersten und der zweiten Einrichtung 4, 5 übertragen. Das Signal 15 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen.

Die zweite Einrichtung 5, die als schematisches Blockschaltbild in Fig. 3 gezeigt ist, weist den Sender/Empfänger 17 als Mittel zum Senden und/oder Empfangen von Signalen und eine beispielsweise aus einem Mikrocomputer bestehende Logikschaltung 18 auf. Weiter ist in der zweiten Einrichtung 5 ein Mittel 19 zur Messung der Feldstärke F wenigstens eines von der ersten Einrichtung 4 übertragenen Signals angeordnet. Das Mittel 19 zur Messung der Feldstärke F misst die Feldstärke beziehungsweise die Intensität eines der übertragenen Signale, und zwar des Bereichsabgrenzungssignals 13. Zweckmäßigerweise ist das Mittel 19 zur Messung der Feldstärke F als ein integrierter Baustein ausgestaltet, der nachfolgend auch als RSS(Radio Signal Strength)-Chip bezeichnet ist. Der RSS-Chip 19 besitzt einen Eingang 20, der mit dem Sender/Empfänger 17 verbunden ist, sowie einen RSSI(Radio Signal Strength Indicator)-Ausgang 21, der wiederum mit der Logikschaltung 18 verbunden ist. Der RSS-Chip 19 erhält über den Eingang 20 das vom Sender/Empfänger 17 jeweils empfangene Signal 13 und erzeugt an seinem RSSI-Ausgang 21 ein in funktioneller Abhängigkeit zur Feldstärke F des Signals 13 stehendes RSSI-Signal. Beispielsweise kann das RSSI-Signal proportional oder logarithmisch zur Feldstärke F des Signals 13 abhängig sein. Durch entsprechende Auswertung des RSSI-Signals lässt sich dann die Standortbestimmung in der Logikschaltung 18 vornehmen. Im Hinblick auf nähere Einzelheiten zur Standortbestimmung wird auch auf die DE 102 02 330 A1 verwiesen.

Das Wecksignal 12 kann beispielsweise eine Kennung zum Kraftfahrzeug-Typ enthalten. Nach Empfang des Wecksignals 12 sind zunächst sämtliche im Wirkbereich 8 befindliche zweite Einrichtungen 5, die zum selben Kraftfahrzeug-Typ gehören, aktiviert. In einer weiteren Ausgestaltung des Schließsystems 3 sendet die erste Einrichtung 4 zwischen dem ersten Signal 12 und dem dritten Signal 13 ein zweites elektromagnetisches Signal 27 zur zweiten Einrichtung 5 als Selektionssignal, wie näher anhand von Fig. 3 zu erkennen ist. Das zweite Signal 27 enthält eine Information über die nähere Identität des Kraftfahrzeugs 1. Dadurch wird bewirkt, dass lediglich die tatsächlich zur ersten Einrichtung 4 zugehörigen zweiten Einrichtungen 5 im aktivierten Zustand verbleiben. Im aktivierten Zustand befindliche, nicht zum Kraftfahrzeug 1 zugehörige zweite Einrichtungen werden jedoch in den Ruhezustand zurückgeführt.

Es bietet sich an, die zur ersten Einrichtung 4 zugehörigen zweiten Einrichtungen 5 in gruppenartige Linien einzuteilen. Bevorzugterweise besitzt ein Kraftfahrzeug 1 zwei Linien, und zwar einen ersten elektronischen Schlüssel sowie Ersatzschlüssel als erste Linie und einen zweiten elektronischen Schlüssel sowie Ersatzschlüssel als zweite Linie. Zweckmäßigerweise weisen die Linien eine Rangfolge zur Durchführung der Authentifikation auf, so dass bei Vorhandensein beider Linien im Wirkbereich 8 lediglich eine Authentifikation mit der ranghöheren Linie, die entsprechend ausgewählt wird, durchzuführen ist. Das Selektionssignal 27 kann nun zusätzlich eine Information zu den der ersten Einrichtung 4 zugeordneten Linien enthalten, um dem Schließsystem 3 gegebenenfalls eine Auswahl für die Authentifikation zu gestatten.

Besonders bevorzugt ist, dass die Trägerwelle für das erste Signal 12 als Wecksignal und/oder für das dritte Signal 13 als Bereichsabgrenzungsignal eine im induktiven, niederfrequenten (LF/Low Frequency- bzw. NF/Niederfrequenz-)Bereich liegende Frequenz aufweist. Beispielsweise kann diese Frequenz in etwa 20 kHz, 120 kHz, 125 kHz o. dgl. betragen. Vorteilhafterweise weist ein solches induktives Signal eine auf die unmittelbare Umgebung des Kraftfahrzeugs 1 oder auf das Kraftfahrzeug 1 selbst begrenzte Reichweite auf. Dadurch wird erreicht, dass die zweite Einrichtung 5 lediglich dann aktiviert wird, wenn sie im Innenraum 22 des Kraftfahrzeugs 1 oder in einem der Wirkbereiche 8 im Außenraum 23 am Kraftfahrzeug 1 befindlich ist, womit Störungen und/oder Sicherheitslücken durch Überreichweiten vermieden sind. Aufgrund der begrenzten Reichweite von induktiven Signalen ist den jeweiligen Bereichen des Kraftfahrzeugs 1 jeweils eine eigene induktive Antenne 29 zugeordnet, und zwar dem Innenraum 22 die LF-Antenne 29a, dem Heckbereich 40 die LF-Antenne 29b und den Autotüren 16 die LF-Antennen 29c, 29d, wie anhand der Fig. 2 zu erkennen ist. Falls gewünscht kann auch das zweite Signal 27, wie in Fig. 3 gezeigt ist, eine im niederfrequenten (NF-)Bereich liegende Frequenz aufweisen. Es ist jedoch besonders bevorzugt, dass die Trägerwelle für das zweite Signal 27 als Selektionssignal und/oder für das vierte Signal 14 als Rückantwortsignal und/oder für das fünfte Signal 15 als Betriebssignal eine im höherfrequenten (RF/Radio Frequency- bzw. HF/High Frequency/Hochfrequenz-)Bereich liegende Frequenz aufweist. Beispielsweise kann diese Frequenz in etwa 315 MHz, 433 MHz, 868 MHz o. dgl. betragen. Aufgrund der größeren Reichweite von höherfrequenten Signalen reicht es aus, eine geringere Anzahl von RF-Antennen 30 im Kraftfahrzeug 1 vorzusehen, wie anhand von Fig. 2 ersichtlich ist.

Elektromagnetische Störungen während der Übertragung der Signale 7 können die Funktionsfähigkeit des Schließsystems 3 beeinträchtigen. Um derartige Beeinträchtigungen zu verringern, ist in der zweiten Einrichtung 5 ein Filter 31 zur Verminderung und/oder Unterdrückung von Störeinflüssen vorgesehen, wie in Fig. 3 zu sehen ist. Zwecks Einsparung von Energie, um somit die Lebensdauer der Batterie für die zweite Einrichtung 5 zu verlängern, ist der Filter 31 zur Verminderung und/oder Unterdrückung von Störeinflüssen zuschaltbar und/oder aktivierbar ausgebildet, wie mit dem Schaltersymbol 32 im Filter 31 angedeutet ist. Selbstverständlich handelt es sich für die Realisierung der Zuschaltung bzw. Aktiverung in bevorzugter Weise um einen elektronischen Schalter, welcher beispielsweise vom Mikroprozessor 18 bedarfsgerecht ansteuerbar ist. Bevorzugterweise wird der Filter 31 bei der Übertragung eines der Signale 7, und zwar insbesondere des ersten Signals 12 und/oder des dritten Signals 13, zugeschaltet und/oder aktiviert, da sich bei diesen Signalen 12, 13 Störungen besonders nachteilig auswirken. Somit wird also der Filter 31 vor allem während der Messung für das RSSI-Signal mittels des RSS-Chips 19 zugeschaltet und/oder aktiviert.

Da die Störungen sich vor allem negativ bei der Standortbestimmung für die zweite Einrichtung 5 auswirken, ist der Filter 31 in der zweiten Einrichtung 5 angeordnet. Der Filter 31 verhindert dort die Einkopplung von Störfrequenzen in die zweite Einrichtung 5 oder vermindert zumindest eine derartige Einkopplung. Solche Störfrequenzen werden beispielsweise beim induktiven Laden eines Akkumulators von Elektrofahrzeugen und/oder von Hybrid-Fahrzeugen erzeugt. Bei Bedarf kann jedoch auch ein weiterer Filter 33 in der ersten Einrichtung 4 vorgesehen sein, was in Fig. 3 insoweit mit Strichlinien eingetragen ist, wobei der Filter 33 falls gewünscht ebenfalls zuschaltbar und/oder aktivierbar sein kann. Der Filter 31, 33 besitzt in nicht zugeschaltetem und/oder inaktiviertem Zustand keinen oder allenfalls einen geringen Ruhestromverbrauch und benötigt lediglich während dessen Betrieb elektrische Energie, womit insbesondere die Lebensdauer der Batterie in der zweiten Einrichtung 5 geschont ist.

Wie bereits erwähnt kann das Mittel 19 zur Messung der Feldstärke F als ein integrierter Baustein ausgestaltet sein. Falls gewünscht können auch der in der zweiten Einrichtung befindliche Sender und/oder Empfänger 17 für das erste Signal 12 und/oder für das dritte Signal 13 sowie das Mittel 19 zur Messung der Feldstärke F als ein einziger integrierter Baustein ausgestaltet sein. Dieser integrierte Baustein ist in bevorzugter Weise als eine anwendungsspezifische integrierte Schaltung in der Art eines LF(Low Frequency)-ASICs ausgebildet. Der aktivierbare Filter 31 ist ebenfalls ein integrierter Bestandteil des LF-ASICs. Der Filter 31 wird bei der Übertragung des dritten Signals 13 für den Betrieb des LF-ASICs als ein LF-Feldmessgerät für die Messung des RSSI-Signals zur Verminderung und/oder Unterdrückung von Störeinflüssen zugeschaltet und/oder aktiviert.

Die Erfindung ist nicht auf das beschriebene und dargestellte Ausführungsbeispiel beschränkt. Die Erfindung umfasst vielmehr auch alle fachmännischen Weiterbildungen im Rahmen der durch die Patentansprüche definierten Erfindung. So kann ein derartiges Schließsystem nicht nur im Kraftfahrzeug, und zwar insbesondere in einem Elektrofahrzeug und/oder einem Hybridfahrzeug, eingesetzt werden. Es ist auch eine Verwendung für ein Türschloss, das sich beispielsweise an einer Immobilie o. dgl. befindet, oder für sonstige Steuergeräte möglich.

### Bezugszeichen-Liste:

- 1:: Kraftfahrzeug / Fahrzeug
- 2:: (berechtigter) Benutzer
- 3:: Schließsystem
- 4:: erste Einrichtung
- 5:: zweite Einrichtung / Schlüssel
- 6:: Autotüre
- 7:: Signal
- 8:: Wirkbereich
- 9:: Zündschloss
- 10:: Lenkradverriegelung
- 11:: Start/Stop-Schalter
- 12:: (erstes) Signal / Wecksignal
- 13:: (drittes) Signal / Bereichsabgrenzungssignal
- 14:: (viertes) Signal / Rückantwortsignal
- 15:: (fünftes) Signal / (codiertes) Betriebssignal
- 16:: Türgriff
- 17:: Sender/Empfänger (in der zweiten Einrichtung)
- 18:: Logikschaltung / Mikroprozessor
- 19:: Mittel zur Messung der Feldstärke / RSS-Chip
- 20:: Eingang (von RSS-Chip)
- 21:: RSSI-Ausgang (an RSS-Chip)
- 22:: Innenraum (vom Kraftfahrzeug)
- 23:: Außenraum (vom Kraftfahrzeug)
- 24:: Sender/Empfänger (in der ersten Einrichtung)
- 25:: Schalter (im Türgriff / Heckgriff)
- 26:: (Näherungs)Sensor (im Türgriff)
- 27:: (zweites) Signal / Selektionssignal
- 28:: Heckgriff
- 29, 29a,b,c,d:: Antenne / LF-Antenne / NF-Antenne
- 30:: Antenne / RF-Antenne / HF-Antenne
- 31:: Filter (in der zweiten Einrichtung)
- 32:: Schaltersymbol
- 33:: Filter (in der ersten Einrichtung)
- 40:: Heckbereich

## Patentansprüche

1. Schließsystem, insbesondere für die Zugangs- und/oder Fahrberechtigung bei einem Kraftfahrzeug (1) in der Art einer KeylessEntry/Go-Funktionalität, mit einer wenigstens zwei Zustände besitzenden, als Steuereinrichtung ausgebildeten ersten Einrichtung (4), wie einer Steuereinrichtung zur Ent- und/oder Verriegelung der Autotüren (6), des Zündschlosses (9), der Lenkradverriegelung (10), zur Freigabe und/oder Sperrung der Wegfahrsperre, des Motorsteuergeräts o. dgl., und mit einer zugehörigen, in der Art eines elektronischen Schlüssels, eines ID-Gebers, einer Chipkarte o. dgl. ausgebildeten zweiten Einrichtung (5), wobei die beiden Einrichtungen (4, 5) zu deren bestimmungsgemäßen Betrieb Sender und/oder Empfänger (24, 17) für insbesondere elektromagnetische Signale (7) besitzen, wobei es sich insbesondere bei wenigstens einem der zwischen der zweiten Einrichtung (5) und der ersten Einrichtung (4) übertragenen Signale (7) um ein codiertes Betriebssignal (15) zur Authentifikation der zweiten Einrichtung (5) handelt, so dass nach positiver Auswertung des übertragenen Betriebssignals (15) bei berechtigter zweiter Einrichtung (5) eine Änderung des Zustandes der ersten Einrichtung (4) bewirkbar ist, und wobei ein Filter (31, 33) zur Verminderung und/oder Unterdrückung von Störeinflüssen in der zweiten Einrichtung (5) und/oder in der ersten Einrichtung (4) vorgesehen ist, **dadurch gekennzeichnet, dass** der Filter (31, 33) zur Verminderung und/oder Unterdrückung von Störeinflüssen zuschaltbar und/oder aktivierbar ist.

2. Schließsystem nach Anspruch 1, **dadurch gekennzeichnet, dass** die erste Einrichtung (4) ein erstes Signal (12) für die zugehörige zweite Einrichtung (5) als Wecksignal sendet, derart dass die zweite Einrichtung (5) aus einem Ruhezustand mit verringertem Energiebedarf in einen aktivierten Zustand für den bestimmungsgemäßen Betrieb übergeführt wird, dass vorzugsweise die erste Einrichtung (4) nach Aussenden des ersten Signals (12) wenigstens ein weiteres, drittes Signal (13) als Bereichsabgrenzungssignal sendet, derart dass die zugehörige zweite Einrichtung (5) deren Standort in Bezug auf die erste Einrichtung (4), insbesondere am und/oder im Kraftfahrzeug (1), bestimmen kann, dass weiter vorzugsweise nachfolgend die zweite Einrichtung (5) ein den Standort beinhaltendes weiteres, viertes Signal (14) zur ersten Einrichtung (4) sendet, dass noch weiter vorzugsweise das codierte Betriebssignal (15) zur Authentifikation der zweiten Einrichtung (5) als fünftes Signal (15) zwischen der zweiten Einrichtung (5) und der ersten Einrichtung (4) übertragen wird, wobei das der Authentifikation dienende fünfte elektromagnetische Signal (15) bevorzugterweise in einer bidirektionalen Kommunikation bestehend aus mehreren Teilsignalen zwischen der ersten und der zweiten Einrichtung (4, 5) übertragen wird, und dass nochmals weiter vorzugsweise die erste Einrichtung (4) zwischen dem ersten und dem dritten Signal (12, 13) ein zweites Signal (27) zur zweiten Einrichtung (5) als Selektionssignal sendet, wobei insbesondere das zweite Signal (27) eine Information über die Identität des Kraftfahrzeugs (1) enthält, derart dass zur ersten Einrichtung (4) zugehörige zweite Einrichtungen (5) im aktivierten Zustand verbleiben und im aktivierten Zustand befindliche, nicht zugehörige zweite Einrichtungen in den Ruhezustand zurückgeführt werden.

3. Schließsystem nach Anspruch 1 oder 2, **dadurch gekennzeichnet, dass** die Trägerwelle für das erste Signal (12) und/oder für das dritte Signal (13) eine im induktiven, niederfrequenten (LF-)Bereich liegende Frequenz (LF/Low Frequency), die beispielsweise in etwa 20, 120, 125 kHz o. dgl. beträgt, aufweist, und dass vorzugsweise die Trägerwelle für das zweite Signal (27) und/oder für das vierte Signal (14) und/oder für das fünfte Signal (15) eine im höherfrequenten (RF- bzw. HF-)Bereich liegende Frequenz (RF/Radio Frequency bzw. HF/High Frequency), die insbesondere in etwa 315, 433, 868 MHz o. dgl. beträgt, aufweist.

4. Schließsystem nach Anspruch 1, 2 oder 3, **dadurch gekennzeichnet, dass** der Filter (31, 33) bei der Übertragung eines Signals, insbesondere des ersten und/oder des dritten Signals (12, 13), zugeschaltet und/oder aktiviert wird, und dass vorzugsweise der Filter (31, 33) in nicht zugeschaltetem und/oder inaktiviertem Zustand einen geringen, insbesondere keinen, Ruhestromverbrauch besitzt.

5. Schließsystem nach einem der Ansprüche 1 bis 4, **dadurch gekennzeichnet, dass** der Filter (31) in der zweiten Einrichtung (5) befindlich ist, und dass vorzugsweise der Filter (31) die Einkopplung von Störfrequenzen in die zweite Einrichtung (5) verhindert und/oder vermindert, insbesondere beim induktiven Laden eines Akkumulators eines Elektrofahrzeugs.

6. Schließsystem nach einem der Ansprüche 1 bis 5, **dadurch gekennzeichnet, dass** in der zweiten Einrichtung (5) ein Mittel (19) zur Messung der Feldstärke (F) des von der ersten Einrichtung (4) übertragenen dritten Signals (13) angeordnet ist, dass vorzugsweise das Mittel (19) zur Messung der Feldstärke (F) ein in funktioneller Abhängigkeit, beispielsweise proportional oder logarithmisch, zur Feldstärke (F) stehendes RSSI(Radio Signal Strength Indicator)-Signal erzeugt, dass weiter vorzugsweise die Standortbestimmung in der zweiten Einrichtung (5) unter Verwendung des RSSI-Signals durchgeführt wird, und dass noch weiter vorzugsweise der Filter (31) während der Messung für das RSSI-Signal zugeschaltet und/oder aktiviert wird.

7. Schließsystem nach einem der Ansprüche 1 bis 6, **dadurch gekennzeichnet, dass** das Mittel (19) zur Messung der Feldstärke (F) als ein integrierter Baustein ausgestaltet ist, dass vorzugsweise der Sender und/oder Empfänger (17) für das erste Signal (12) und/oder für das dritte Signal (13) sowie das Mittel (19) zur Messung der Feldstärke (F) als eine anwendungsspezifische integrierte Schaltung in der Art eines LF(Low Frequency)-ASICs ausgebildet ist, dass weiter vorzugsweise der Filter (31) ein Bestandteil des LF-ASICs ist, und dass noch weiter vorzugsweise der Filter (31) bei der Übertragung des dritten Signals (13), insbesondere für den Betrieb des LF-ASICs als ein LF-Feldmessgerät für die Messung des RSSI-Signals, zugeschaltet und/oder aktiviert ist.

8. Verfahren zum Betrieb eines Schließsystems (3), insbesondere für die Zugangs- und/oder Fahrberechtigung bei einem Kraftfahrzeug (1) in der Art einer KeylessEntry/Go-Funktionalität, wobei für das Schließsystem (3) eine wenigstens zwei Zustände besitzende, als Steuereinrichtung ausgebildete erste Einrichtung (4), wie eine Steuereinrichtung zur Ent- und/oder Verriegelung der Autotüren (6), des Zündschlosses (9), der Lenkradverriegelung (10), zur Freigabe und/oder Sperrung der Wegfahrsperre, des Motorsteuergeräts o. dgl., und eine zugehörige, in der Art eines elektronischen Schlüssels, eines ID-Gebers, einer Chipkarte o. dgl. ausgebildete zweite Einrichtung (5) vorgesehen sind, wobei die beiden Einrichtungen (4, 5) zu deren bestimmungsgemäßen Betrieb Sender und/oder Empfänger (24, 17) für insbesondere elektromagnetische Signale (7) besitzen, wobei es sich insbesondere bei wenigstens einem der zwischen der zweiten Einrichtung (5) und der ersten Einrichtung (4) übertragenen Signale (7) um ein codiertes Betriebssignal (15) zur Authentifikation der zweiten Einrichtung (5) handelt, so dass nach positiver Auswertung des übertragenen Betriebssignals (15) bei berechtigter zweiter Einrichtung (5) eine Änderung des Zustandes der ersten Einrichtung (4) bewirkbar ist, **dadurch gekennzeichnet, dass** Störeinflüsse in der zweiten Einrichtung (5) und/oder in der ersten Einrichtung (4) mittels eines zuschaltbaren und/oder aktivierbaren Filters (31, 33) vermindert und/oder unterdrückt werden.

9. Verfahren zum Betrieb eines Schließsystems (3) nach Anspruch 8, **dadurch gekennzeichnet, dass** von der ersten Einrichtung (4) ein erstes Signal (12) für die zugehörige zweite Einrichtung (5) als Wecksignal gesendet wird, derart dass die zweite Einrichtung (5) aus einem Ruhezustand mit verringertem Energiebedarf in einen aktivierten Zustand für den bestimmungsgemäßen Betrieb übergeführt wird, dass vorzugsweise von der ersten Einrichtung (4) nach Aussenden des ersten Signals (12) wenigstens ein weiteres, drittes Signal (13) als Bereichsabgrenzungssignal gesendet wird, derart dass die zugehörige zweite Einrichtung (5) deren Standort in Bezug auf die erste Einrichtung (4), insbesondere am und/oder im Kraftfahrzeug (1), bestimmen kann, und dass weiter vorzugsweise der Filter (31) in der zweiten Einrichtung (5) bei der Übertragung des ersten und/oder dritten Signals (12, 13), insbesondere für die Messung der Feldstärke (F) des dritten Signals (13) für die Bestimmung des Standorts der zweiten Einrichtung (5), zur Verminderung und/oder Unterdrückung von Störeinflüssen zugeschaltet und/oder aktiviert wird.

## Claims

1. A locking system, in particular for access and/or driving authorisation for a motor vehicle (1) in the manner of a keyless entry/go functionality, comprising a first device (4) which has at least two states and is designed as a control device, such as a control device for unlocking and/or locking the car doors (6), the ignition lock (9), the steering wheel lock (10), for enabling and/or disabling the immobiliser, the motor control unit or the like, and comprising an associated second device (5) designed in the manner of an electronic key, of an ID transmitter, of a chip card or the like, wherein the two devices (4, 5) for the intended operation thereof have transmitters and/or receivers (24, 17) for in particular electromagnetic signals (7), wherein in particular at least one of the signals (7) transmitted between the second device (5) and the first device (4) is an encoded operating signal (15) for authenticating the second device (5) so that once the transmitted operating signal (15) has been positively evaluated and the second device (5) is authorised, a change in the state of the first device (4) can be brought about, and wherein a filter (31, 33) is provided for reducing and/or suppressing interferences in the second device (5) and/or in the first device (4), **characterised in that** the filter (31, 33) can be switched on and/or activated in order to reduce and/or suppress interferences.

2. The locking system according to claim 1, **characterised in that** the first device (4) transmits a first signal (12) for the associated second device (5) as a wake-up signal such that the second device (5) is transferred from an idle state having reduced energy demand into an activated state for intended operation, **in that** preferably the first device (4), after the first signal (12) is transmitted, transmits at least one further, third signal (13) as a range boundary signal such that the associated second device (5) can determine the location thereof relative to the first device (4), in particular on and/or in the motor vehicle (1), **in that** more preferably, subsequently, the second device (5) transmits a further, fourth signal (14), containing the location, to the first device (4), **in that** even more preferably the encoded operating signal (15) for authenticating the second device (5) is transmitted as a fifth signal (15) between the second device (5) and the first device (4), wherein the fifth electromagnetic signal (15) used for authentication preferably in bidirectional communication consisting of a plurality of partial signals is transmitted between the first and the second device (4, 5), and **in that**, once again, more preferably the first device (4) transmits a second signal (27) between the first and the third signal (12, 13) to the second device (5) as a selection signal, wherein in particular the second signal (27) contains information about the identity of the motor vehicle (1), such that second devices (5) associated with the first device (4) remain in the activated state and non-associated second devices which are in the activated state are returned to the idle state.

3. The locking system according to claim 1 or 2, **characterised in that** the carrier wave for the first signal (12) and/or for the third signal (13) has a frequency (LF/low frequency) in the inductive, low-frequency (LF) range, said frequency being, for example, approximately 20, 120, 125 kHz or the like, and **in that** preferably the carrier wave for the second signal (27) and/or for the fourth signal (14) and/or for the fifth signal (15) has a frequency (RF/radio frequency or HF/high frequency) in the higher-frequency (RF or HF) range, said frequency being in particular approximately 315, 433, 868 MHz or the like.

4. The locking system according to claim 1, 2 or 3, **characterised in that** the filter (31, 33) during the transmission of a signal, in particular of the first and/or of the third signal (12, 13), is switched on and/or activated, and **in that** preferably the filter (31, 33) in the non-switched-on and/or inactivated state has a low quiescent current consumption, in particular no quiescent current consumption.

5. The locking system according to one of claims 1 to 4, **characterised in that** the filter (31) is disposed in the second device (5), and **in that** preferably the filter (31) prevents and/or reduces the coupling of interference frequencies into the second device (5), in particular during the inductive charging of a battery of an electric vehicle.

6. The locking system according to one of claims 1 to 5, **characterised in that** a means (19) for measuring the field strength (F) of the third signal (13) transmitted from the first device (4) is arranged in the second device (5), **in that** preferably the means (19) for measuring the field strength (F) generates an RSSI (radio signal strength indicator) signal which is in functional dependence, for example proportionally or logarithmically, with respect to the field strength (F), **in that** more preferably the location is determined in the second device (5) using the RSSI signal, and **in that** even more preferably the filter (31) is switched on and/or activated for the RSSI signal during the measurement.

7. The locking system according to one of claims 1 to 6, **characterised in that** the means (19) for measuring the field strength (F) is designed as an integrated component, **in that** preferably the transmitter and/or receiver (17) for the first signal (12) and/or for the third signal (13) and the means (19) for measuring the field strength (F) is designed as an application-specific integrated circuit in the form of an LF (low-frequency) ASIC, **in that** more preferably the filter (31) is part of the LF ASIC, and **in that** even more preferably the filter (31) during the transmission of the third signal (13), in particular for the operation of the LF ASIC as an LF field measuring unit for measuring the RSSI signal, is switched on and/or activated.

8. A method for operating a locking system (3), in particular for access and/or driving authorisation for a motor vehicle (1), in the manner of a keyless entry/go functionality, wherein for the locking system (3) a first device (4) which has at least two states and is designed as a control device, such as a control device for unlocking and/or locking the car doors (6), the ignition lock (9), the steering wheel lock (10), for enabling and/or disabling the immobiliser, the motor control unit or the like, and an associated second device (5) designed in the manner of an electronic key, an ID transmitter, a chip card or the like are provided, wherein the two devices (4, 5) for the intended operation thereof have transmitters and/or receivers (24, 17) for in particular electromagnetic signals (7), wherein in particular at least one of the signals (7) transmitted between the second device (5) and the first device (4) is an encoded operating signal (15) for authenticating the second device (5) so that once the transmitted operating signal (15) is positively evaluated and the second device (5) is authorised, a change in the state of the first device (4) can be brought about, **characterised in that** interferences in the second device (5) and/or in the first device (4) are reduced and/or suppressed by means of a filter (31, 33) which can be switched on and/or activated.

9. The method for operating a locking system (3) according to claim 8, **characterised in that** a first signal (12) is transmitted from the first device (4) for the associated second device (5) as a wake-up signal such that the second device (5) is transferred from an idle state having reduced energy demand into an activated state for intended operation, **in that** preferably at least one further, third signal (13) as a range boundary signal is transmitted from the first device (4), after the first signal (12) has been transmitted, in such a way that the associated second device (5) can determine the location thereof in relation to the first device (4), in particular on and/or in the motor vehicle (1), and **in that** more preferably the filter (31) in the second device (5) is switched on and/or activated during the transmission of the first and/or third signal (12, 13), in particular for measuring the field strength (F) of the third signal (13), for determining the location of the second device (5) and for reducing and/or suppressing interferences.

## Revendications

1. Système de fermeture, permettant en particulier d'accéder à un véhicule automobile (1) et/ou de le conduire sous la forme d'une fonctionnalité d'entrée/de démarrage mains libres, comprenant un premier dispositif (4) présentant au moins deux états, configuré à la manière d'un dispositif de commande, tel qu'un dispositif de commande servant à verrouiller et/ou déverrouiller les portes du véhicule (6), la serrure de contact (9), le blocage du volant (10), à bloquer et/ou débloquer le dispositif antidémarrage, le système de commande du moteur ou analogue et comprenant un deuxième dispositif (5) associé, configuré à la manière d'une clé électronique, d'un transmetteur d'ID, d'une carte à puce ou analogue, les deux dispositifs (4, 5) comportant, dans le but de pouvoir fonctionner selon les spécifications, des émetteurs et/ou récepteurs (24, 17) pour des signaux en particulier électromagnétiques (7), au moins un des signaux (7) transmis entre le deuxième dispositif (5) et le premier dispositif (4) étant en particulier un signal de fonctionnement codé (15) servant à authentifier le deuxième dispositif (5), de sorte qu'après une évaluation positive du signal de fonctionnement transmis (15) en présence d'un deuxième dispositif (5) valide, l'état du premier dispositif (4) puisse être modifié et un filtre (31, 33) étant prévu pour atténuer et/ou supprimer les influences parasites dans le deuxième dispositif (5) et/ou dans le premier dispositif (4), **caractérisé en ce que** le filtre (31, 33) destiné à atténuer et/ou supprimer les influences parasites peut être mis en marche et/ou activé.

2. Système de fermeture selon la revendication 1, **caractérisé en ce que** le premier dispositif (4) envoie un premier signal (12) pour le deuxième dispositif associé (5) sous forme d'un signal de réveil, de sorte que le deuxième dispositif (5) passe d'un état de repos avec un besoin énergétique réduit à un état activé pour un fonctionnement conforme aux spécifications, **en ce que**, de préférence, le premier dispositif (4), après l'envoi du premier signal (12), envoie au moins un autre troisième signal (13) sous forme d'un signal de délimitation de zone, de sorte que le deuxième dispositif associé (5) puisse déterminer son emplacement par rapport au premier dispositif (4), notamment au niveau du véhicule automobile (1) et/ou dans ce dernier, **en ce que**, de préférence encore, le deuxième dispositif (5) envoie ensuite un autre quatrième signal (14) contenant l'emplacement au premier dispositif (4), **en ce que**, de préférence toujours, le signal de fonctionnement codé (15) servant à authentifier le deuxième dispositif (5) est transmis sous forme de cinquième signal (15) entre le deuxième dispositif (5) et le premier dispositif (4), le cinquième signal électromagnétique (15) servant à l'authentification étant préférablement transmis dans une communication bidirectionnelle se composant de plusieurs signaux partiels entre le premier et le deuxième dispositif (4, 5) et **en ce que**, de préférence toujours, le premier dispositif (4) envoie entre le premier et le troisième signal (12, 13) un deuxième signal (27) au deuxième dispositif (5) sous forme d'un signal de sélection, le deuxième signal (27) contenant en particulier une information sur l'identité du véhicule automobile (1), de sorte que les deuxièmes dispositifs (5) associés au premier dispositif (4) restent dans l'état activé et que les deuxièmes dispositifs non associés se trouvant dans l'état activé reviennent à l'état de repos.

3. Système de fermeture selon la revendication 1 ou 2, **caractérisé en ce que** l'onde porteuse pour le premier signal (12) et/ou pour le troisième signal (13) présente une fréquence se trouvant dans une plage de basse fréquence (LF) inductive (LF/Low Frequency), qui est par exemple approximativement de 20, 120, 125 kHz ou analogue et **en ce que**, de préférence, l'onde porteuse pour le deuxième signal (27) et/ou pour le quatrième signal (14) et/ou pour le cinquième signal (15) présente une fréquence se trouvant dans une plage de haute fréquence (RF ou HF) (RF/Radio Frequency ou HF/High Frequency), qui est en particulier approximativement de 315, 433, 868 MHz ou analogue.

4. Système de fermeture selon la revendication 1, 2 ou 3, **caractérisé en ce que** le filtre (31, 33) est mis en marche et/ou activé lors de la transmission d'un signal, notamment du premier et/ou du troisième signal (12, 13), et **en ce que**, de préférence, le filtre (31, 33) possède une consommation de courant au repos faible, en particulier nulle, dans l'état non mis en marche et/ou inactif.

5. Système de fermeture selon une des revendications 1 à 4, **caractérisé en ce que** le filtre (31) se trouve dans le deuxième dispositif (5) et **en ce que**, de préférence, le filtre (31) empêche et/ou atténue le couplage de fréquences parasites dans le deuxième dispositif (5), en particulier lors du chargement inductif d'un accumulateur d'un véhicule électrique.

6. Système de fermeture selon une des revendications 1 à 5, **caractérisé en ce que**, dans le deuxième dispositif (5), est disposé un moyen (19) permettant de mesurer l'intensité de champ (F) du troisième signal (13) transmis par le premier dispositif (4), **en ce que**, de préférence, le moyen (19) permettant de mesurer l'intensité de champ (F) produit un signal RSSI (Radio Signal Strength Indicator) dépendant sur le plan fonctionnel, par exemple de manière proportionnelle ou logarithmique, de l'intensité de champ (F), **en ce que**, de préférence encore, la détermination d'emplacement est réalisée dans le deuxième dispositif (5) en utilisant le signal RSSI et **en ce que**, de préférence toujours, le filtre (31) est mis en marche et/ou activé pendant la mesure pour le signal RSSI.

7. Système de fermeture selon une des revendications 1 à 6, **caractérisé en ce que** le moyen (19) permettant de mesurer l'intensité de champ (F) est conçu comme un composant intégré, **en ce que**, de préférence, l'émetteur et/ou le récepteur (17) pour le premier signal (12) et/ou pour le troisième signal (13), ainsi que le moyen (19) permettant de mesurer l'intensité de champ (F) sont conçus comme un circuit intégré spécifique à l'application sous la forme d'un ASIC LF (Low Frequency), **en ce que**, de préférence encore, le filtre (31) est un constituant de l'ASIC LF et **en ce que**, de préférence toujours, le filtre (31), lors de la transmission du troisième signal (13), en particulier pour le fonctionnement de l'ASIC LF, est mis en marche et/ou activé sous la forme d'un appareil de mesure de champ LF pour la mesure du signal RSSI.

8. Procédé d'exploitation d'un système de fermeture (3), permettant en particulier d'accéder à un véhicule automobile (1) et/ou de le conduire sous la forme d'une fonctionnalité d'entrée/de démarrage mains libres, dans lequel sont prévus, pour le système de fermeture (3), un premier dispositif (4) présentant au moins deux états, configuré à la manière d'un dispositif de commande, tel qu'un dispositif de commande servant à verrouiller et/ou déverrouiller les portes du véhicule (6), la serrure de contact (9), le blocage du volant (10), à bloquer et/ou débloquer le dispositif antidémarrage, le système de commande du moteur ou analogue et comprenant un deuxième dispositif (5) associé, configuré à la manière d'une clé électronique, d'un transmetteur d'ID, d'une carte à puce ou analogue, les deux dispositifs (4, 5) comportant, dans le but de pouvoir fonctionner selon l'invention, des émetteurs et/ou récepteurs (24, 17) pour des signaux en particulier électromagnétiques (7), au moins un des signaux (7) transmis entre le deuxième dispositif (5) et le premier dispositif (4) étant en particulier un signal de fonctionnement codé (15) servant à authentifier le deuxième dispositif (5), de sorte qu'après une évaluation positive du signal de fonctionnement transmis (15) en présence d'un deuxième dispositif (5) valide, l'état du premier dispositif (4) puisse être modifié, **caractérisé en ce que** les influences parasites dans le deuxième dispositif (5) et/ou dans le premier dispositif (4) sont atténués et/ou supprimés au moyen d'un filtre (31, 33) pouvant être mis en marche et/ou activé.

9. Procédé d'exploitation d'un système de fermeture (3) selon la revendication 8, **caractérisé en ce qu'**un premier signal (12) est envoyé par le premier dispositif (4) au deuxième dispositif associé (5) sous forme d'un signal de réveil, de sorte que le deuxième dispositif (5) passe d'un état de repos avec un besoin énergétique réduit à un état activé pour le fonctionnement conforme aux spécifications, **en ce que**, de préférence, après l'envoi du premier signal (12), au moins un autre troisième signal (13) est envoyé par le premier dispositif (4) sous la forme d'un signal de délimitation de zone, de sorte que le deuxième dispositif associé (5) puisse déterminer son emplacement par rapport au premier dispositif (4), notamment au niveau du véhicule automobile (1) et/ou dans ce dernier, et **en ce que**, de préférence encore, le filtre (31) dans le deuxième dispositif (5), est mis en marche et/ou activé lors de la transmission des premier et/ou troisième signaux (12, 13), notamment pour la mesure de l'intensité de champ (F) du troisième signal (13) pour la détermination de l'emplacement du deuxième dispositif (5), afin d'atténuer et/ou de supprimer les influences parasites.
